# FASCICULE DE BREVET EUROPEEN

(11) **EP 3 772 420 B1**
(45) Date de publication et mention de la délivrance du brevet: **11.05.2022**
(21) Numéro de dépôt: 20186387.5
(22) Date de dépôt: 17.07.2020
(51) Int. Cl.: B60C 23/04

(54) **PROCÉDÉ DE GESTION D'ÉNERGIE D'UN SYSTÈME DE VÉRIFICATION DE LA PRESSION DE GONFLAGE DES PNEUMATIQUES D'UN AÉRONEF**
VERFAHREN ZUM ENERGIEMANAGING IN EINEM REIFENDRUCKÜBERWACHUNGSYTEM IN EINEM FLUGZEUG
METHOD FOR MANAGING THE ENERGY OF A SYSTEM FOR VERIFYING THE INFLATION PRESSURE OF THE TIRES OF AN AIRCRAFT

(30) Priorité: 05.08.2019 FR 1908971
(43) Date de publication de la demande: 10.02.2021
(73) Titulaire: Safran Landing Systems, 78140 Vélizy-Villacoublay (FR); SAFRAN ELECTRONICS & DEFENSE, 92100 Boulogne Billancourt (FR)
(72) Inventeur: DAGES, OLIVIER, 77550 MOISSY-CRAMAYEL (FR); LEVAVASSEUR, DIDIER, 92100 BOULOGNE-BILLANCOURT (FR); NOCENTE, STEPHANIE, 92100 BOULOGNE-BILLANCOURT (FR)
(74) Mandataire: Cabinet Beau de Loménie

(56) Documents cités:
- EP-A1- 3 118 030
- EP-A1- 3 498 501

## Description

### Domaine technique

La présente invention concerne un procédé de gestion d'énergie d'un système de vérification de la pression de gonflage des pneumatiques d'aéronef durant différentes phases de vol ou dans le cadre d'opérations de maintenance.

### Technique antérieure

Depuis le poste de pilotage ou durant des opérations de maintenance, il est utile de connaitre la pression des pneumatiques des différentes roues du train d'atterrissage d'un aéronef.

A cet effet, il est connu de recourir à un capteur de mesure de la pression des pneumatiques d'un tel aéronef directement installé sur la roue. Ce capteur connu sous l'appellation de TPMS (pour « Tire Pressure Monitoring System »), couplé à un système de traitement de données embarqué, permet aux pilotes d'avoir un affichage dans le poste de pilotage de l'état de la pression de chacun des pneumatiques au cours des différentes phases de vol. Durant les opérations de maintenance, les opérateurs, en se déplaçant dans le poste de pilotage, peuvent aussi consulter cet affichage afin d'obtenir l'information souhaitée.

Chaque TPMS monté sur une jante de la roue est alimenté et communique à l'aide d'un câble le reliant à un contact tournant installé dans le moyeu de la roue. Or, cette connectique filaire, soumise à un environnement sévère en termes de chocs, les câbles pouvant par exemple être arrachés lors d'activités humaines autour des roues, de vibration, notamment lors des entrées/sorties du train d'atterrissage, et de température est un point de faiblesse du système.

Une alternative connue à ce problème a été de protéger le câble d'alimentation/communication à l'aide d'un bras mécanique et de supprimer le contact tournant grâce à une adaptation électromagnétique. Si cette solution a permis d'améliorer la fiabilité et de mieux garantir la durée de vie du système, elle s'est faite malheureusement au prix d'une augmentation de l'encombrement sur la roue.

Aussi, la demanderesse a proposé dans son brevet FR2822755 de supprimer l'architecture filaire antérieure et de la remplacer par un système de communication sans fil entre chacune de roues comportant un capteur de pression et munie d'une antenne tournante et une unité d'exploitation éloignée du train d'atterrissage et munie d'une antenne fixe, cette unité d'exploitation étant seule en liaison filaire avec le poste de pilotage.

Le document EP 3 498 501 A1 divulgue un aéronef muni d'une surveillance des pressions et températures des pneumatiques, comportant un calculateur communiquant avec les capteurs des pneumatiques, et relié au cockpit. EP 3 498 501 A1 divulgue de-même un horodatage via AES des données, et des moyens de communications en bandes ISM, et en bandes NFC.

Quant au document EP 3 118 030 A1 divulgue pour sa part un aéronef muni d'une surveillance des pressions et températures des pneumatiques, comportant un calculateur communiquant avec les capteurs des pneumatiques munis d'identificateur ID, initiés par un capteur accéléromètre de mouvement de roue, donnant ainsi sa substance au préambule de la revendication 1.

Si cette solution donne globalement satisfaction, elle souffre encore de certains inconvénients. La remontée régulière des données depuis les capteurs de pression (au nombre de 3 à 22 selon les types actuels d'aéronefs) est de nature à nuire à leur autonomie, alors qu'il est nécessaire d'atteindre des durées de vie pouvant aller jusqu'à 10 ans. L'identification et le traitement de ces données doivent en outre pouvoir être parfaitement individualisés, en excluant les informations provenant d'un autre aéronef, tout en garantissant une opérabilité mondiale. Enfin, la puissance d'émission ne doit pas être en mesure de perturber les systèmes de navigation de l'aéronef.

### Exposé de l'invention

L'invention se propose donc de pallier ces inconvénients en adaptant, en fonction des phases de vol, la fréquence de récurrence des mesures de pression, en optimisant le protocole de communication en fonction de ces phases et de l'exploitation (pour s'adapter à des conditions de propagation différentes).

Ces buts sont atteints par un procédé de gestion de l'énergie dans un système de vérification de la pression de gonflage des pneumatiques d'un aéronef comprenant les étapes suivantes :
- mesure par un capteur de pression d'au moins une pression de gonflage de chacun des pneumatiques,
- obtention d'une donnée d'identification unique relative à chacun des pneumatiques,
- envoi via une liaison de communication sans fil des mesures et données ainsi collectées à une unité de traitement disposée dans ou hors de l'aéronef pour leur mise à la disposition d'un pilote ou d'un opérateur de maintenance,
caractérisé en ce que l'étape d'envoi des mesures et données est effectuée de manière acyclique en fonction d'un signal de déclenchement donné par un détecteur de mouvement des roues de l'aéronef tant que la vitesse est inférieure à une vitesse maximale prédéterminée, cette étape d'envoi étant interrompue et le capteur de pression mis en veille lorsque cette vitesse maximale est dépassée, et en ce que, sur une alerte, des séquences intermédiaires d'envoi des données peuvent être déclenchées durant cette étape d'envoi.

Ainsi, malgré la capacité limitée des réservoirs d'énergie dont dépend l'activation des capteurs de pression, il devient possible d'envisager des missions pouvant aller jusqu'à dix années, correspondant à la durée de vie actuelles des capteurs de pression, tout en se gardant la possibilité d'une réaction rapide en cas d'alerte.

Avantageusement, l'étape d'envoi des mesures et données est déclenchée selon une périodicité prédéterminée de quelques secondes à quelques minutes ou de quelques minutes à quelque heures, selon qu'un mouvement des roues de l'aéronef est détecté ou non.

De préférence, l'étape d'envoi des mesures et données comporte en outre l'envoi de données de surveillance relatives au moins à l'état du capteur de pression et de la liaison de communication sans fil.

Avantageusement, l'étape d'envoi des mesures et données est précédée par un horodatage des mesures et/ou par un chiffrement des mesures et données, typiquement par une signature de type AES 128.

De préférence, l'étape d'envoi des mesures et données est effectuée soit sous forme de n émissions successives, n correspondant au nombre de capteurs de pression communiquant simultanément, soit sous forme d'une émission unique succédant à un traitement de n mesures de pression collectées préalablement.

Avantageusement, le traitement comporte l'une des opérations suivantes : moyennes, régressions linéaires ou toutes autres opérations pour améliorer la précision et la stabilité des mesures de pression.

De préférence, l'étape de mesure comporte en outre la mesure de la température de chacun des pneumatiques.

Avantageusement, caractérisé en ce que la liaison de communication sans fil est effectuée sur l'une des bandes de fréquence suivantes : bande ISM à 2,4GHz, bande WAIC entre 4,2 et 4,4 GHz.

De préférence, le détecteur de mouvement est un inclinomètre, un accéléromètre ou un gyroscope permettant de détecter le mouvement des roues de l'aéronef.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur lesquels :
[Fig. 1] La figure 1 est une vue schématique d'un aéronef équipé d'un système de vérification de pression mettant en œuvre le procédé de l'invention, et
[Fig. 2] La figure 2 illustre schématiquement les différentes opérations permettant la communication des informations dans le procédé de l'invention.

### Description des modes de réalisation

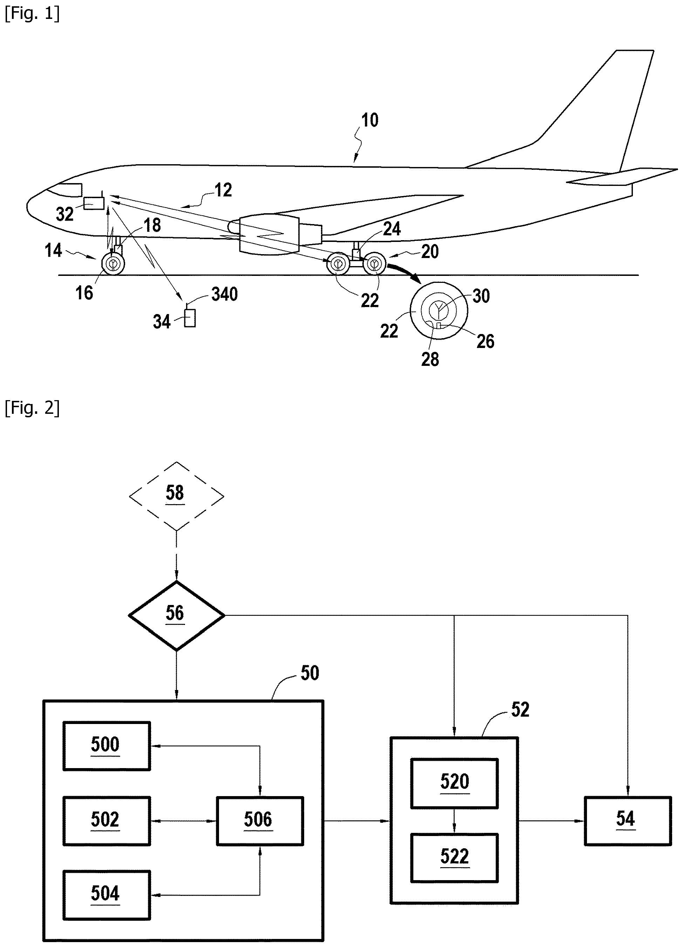

Sur la figure 1 est représenté de façon très schématique un aéronef 10 équipé d'un système 12 de vérification de la pression de gonflage des pneumatiques de chacune des roues de cet aéronef.

Dans l'exemple illustré, cet aéronef est pourvu d'une part à l'avant d'un premier élément 14 de train d'atterrissage comportant deux roues 16 montées sur un axe commun à l'extrémité d'une première jambe 18 de train d'atterrissage et d'autre part, sensiblement au centre de l'appareil, de part et d'autre de son axe longitudinal, des deuxième et troisième éléments 20 de train d'atterrissage (seul le deuxième apparait sur la figure) comportant chacun par exemple quatre roues 22 montées sur deux axes communs parallèles à l'extrémité d'une deuxième jambe 24 de train d'atterrissage.

A chaque pneumatique équipant une roue de l'aéronef correspond un capteur de pression 26 porté par la jante 28 de la roue et une antenne 30 dite tournante car elle suit la rotation de la roue, par l'intermédiaire de laquelle au moins l'information de pression issue du capteur de pression sera transférée via une liaison de communication sans fil à un module d'affichage (via éventuellement un module de traitement intermédiaire non illustré comportant une antenne fixe destinée à communiquer avec l'antenne tournante) disposé à l'écart de cette roue.

Typiquement, cette liaison de communication sans fil s'effectue, selon la disposition du module d'affichage ou du module de traitement intermédiaire intégrant l'antenne fixe et les moyens de communication associés, sur la bande ISM (pour « Industriel, Scientifique et Médical ») à 2,4GHz ou sur la bande WAIC (pour « Wireless Avionics Intra-Communications ») entre 4,2 et 4,4 GHz. Le capteur de pression est classiquement constitué d'un transducteur adapté pour convertir la pression interne du pneumatique en un signal électrique et d'une unité de traitement pour associer à ce signal électrique une valeur de pression ainsi qu'au moins un identifiant du pneumatique concerné, enregistré dans une mémoire secourue par une batterie, qui peut être rechargeable ou non, et associée à cette unité de traitement.

Le module d'affichage qui permet l'affichage des différentes pressions de gonflage issues des différents pneumatiques est constitué avantageusement par un dispositif 32 disposé dans l'aéronef, solidaire de sa structure et fixé à demeure, par exemple dans le cockpit de l'aéronef, et à partir duquel ces informations de pression ou autres pourront être déchargées vers un dispositif portatif 34 à destination d'un pilote ou d'un opérateur de maintenance. Dans une variante avantageuse, ce module d'affichage sera constitué par le seul dispositif portatif 34 vers lequel communiqueront directement les capteurs de pression via la liaison sans fil entre l'antenne tournante 30 et l'antenne 340 intégrée au dispositif portatif.

Toutefois, cette disposition particulière avantageuse ne saurait être considérée comme limitative et toute autre disposition est aussi envisageable. Ainsi, il n'est pas obligatoire que chaque capteur de pression communique avec un unique récepteur placé dans ou hors de l'aéronef, il est en effet possible que les capteurs de pression placés sur les trains communiquent vers un ou plusieurs récepteurs situés au plus proche de la roue, sur la jambe de train d'atterrissage ou au niveau du puit de train par exemple ou encore que les capteurs de pression placés sur le train avant communiquent vers un point d'accès situé au niveau ou sous le cockpit et ceux des trains arrière vers un point d'accès situé soit au niveau du fuselage soit au niveau des ailes en regard des récepteurs. Dans tous les cas, il sera avantageux que ces récepteurs comportent des moyens de protection de type pare-feu pour protéger les communications de l'aéronef de l'extérieur.

Comme le montre la figure 2, la gestion de la communication met en œuvre trois opérations successives : une collecte des données 50, un envoi de ces données 52 et une mise en veille de la communication 54 à l'issu de cet envoi, l'ensemble étant sous le contrôle du temps passé délivré par un compteur 56 ou une ou plusieurs horloges 56. En effet, les capteurs de pression peuvent comporter chacun une horloge interne pouvant être régulièrement synchronisée sur une horloge centrale pour s'assurer du rafraichissement correct des mesures ou assurer une stratégie de communication sur requête. La collecte des données comporte une collecte 500 des différentes mesures de pression, une collecte 502 des données d'identification des capteurs de pression et une collecte 506 des données de surveillance relatives par exemple à l'état de la mesure, à l'état de la communication sans fil ou à l'état de la batterie, ces différentes mesures et données faisant l'objet d'une vérification de leur validité et de préférence d'un horodatage 506. Il peut être noté qu'un appairage de la roue peut être effectué au moyen d'un fichier de configuration et que l'horodatage de la pression issue du capteur peut aussi être comparée à celui du récepteur afin de s'assurer de la contiguïté et de la non-obsolescence des mesures de pression reçues.

L'envoi de ces données sous forme de n émissions successives ou non (c'est à dire communiquant en même temps), n dépendant par exemple du nombre de capteurs installés sur l'aéronef (dépendant du nombre de roues équipées) pour éviter toute perte des messages, comporte un formatage 520 (mise en forme selon le protocole de communication retenu) et de préférence un chiffrement de ces données 522. Toutefois, il convient de noter qu'il est aussi possible de traiter ces n données collectées avant d'activer en une seule fois la séquence d'émission puis de mise en veille. Ce traitement peut s'accompagner de la réalisation de moyennes, de régressions linéaires et toutes autres opérations connues pour améliorer la précision et la stabilité des mesures de pression, lesquelles pourront être adaptées en fonction de la température, lorsqu'en plus du capteur de pression, un capteur de température du pneumatique est disponible au niveau de la jante de la roue.

Afin d'optimiser la consommation d'énergie, cet envoi des données collectées est effectué de façon acyclique par opposition à un envoi cyclique de ces données dans lequel les données sont envoyées cycliquement à une fréquence définie par avance suivant un besoin opérationnel et donc la durée de vie de la batterie limitée en fonction de la périodicité choisie (typiquement de l'ordre de la minute) et du nombre de redondances nécessaires pour garantir la valeur de la donnée reçue (typiquement trois redondances). Cet envoi acyclique repose sur l'emploi d'un dispositif permettant de détecter le mouvement de la roue, basé sur un détecteur de mouvement 58 qui peut être par exemple un inclinomètre, un accéléromètre ou un gyroscope, et qui va agir sur le compteur ou l'horloge 56 pour déclencher l'envoi des données.

Ainsi, lorsqu'aucun mouvement de roue n'est détecté, la périodicité d'envoi de données est de l'ordre de l'heure (ou de quelques heures selon le besoin opérationnel). Toutefois, sur une alerte, des séquences intermédiaires d'envoi des données (avec une périodicité pouvant être réduit à quelques minutes) peuvent être déclenchées. Par contre, lorsqu'un mouvement d'une roue est détecté et éventuellement considéré comme suffisamment long, les séquences de communication permettant l'envoi des données collectées sont déclenchées avec une périodicité prédéterminée pouvant aller de quelques secondes à quelques minutes selon le besoin opérationnel, tant que la vitesse est inférieure à une vitesse maximale prédéterminée, par exemple 30 nœuds. Lorsque cette vitesse maximale est dépassée, l'envoi est interrompu et le capteur de pression est mis en veille.

La périodicité des mesures peut ne pas être calée sur celle des envois de données, par exemple se faire plus rapidement et générer des conditions de déclenchement de séquences d'envoie intermédiaire (par exemple : détection de données aberrantes, dépassement de seuils, etc...).

## Revendications

1. Procédé de gestion de l'énergie dans un système de vérification de la pression de gonflage des pneumatiques d'un aéronef comprenant les étapes suivantes :
- mesure par un capteur de pression (26) d'au moins une pression de gonflage de chacun des pneumatiques,
- obtention d'une donnée d'identification unique relative à chacun des pneumatiques,
- envoi via une liaison de communication sans fil (30 ; 32, 34) des mesures et données ainsi collectées à une unité de traitement (32, 34) disposée dans ou hors de l'aéronef pour leur mise à la disposition d'un pilote ou d'un opérateur de maintenance,
**caractérisé en ce que** l'étape d'envoi des mesures et données est effectuée de manière acyclique en fonction d'un signal de déclenchement donné par un détecteur de mouvement (58) des roues (22) de l'aéronef tant que la vitesse est inférieure à une vitesse maximale prédéterminée, cette étape d'envoi étant interrompue et le capteur de pression (26) mis en veille lorsque cette vitesse maximale est dépassée, et **en ce que**, sur une alerte, des séquences intermédiaires d'envoi des données peuvent être déclenchées durant cette étape d'envoi.

2. Procédé selon la revendication 1, **caractérisé en ce que** l'étape d'envoi des mesures et données est déclenchée selon une périodicité prédéterminée de quelques secondes à quelques minutes ou de quelques minutes à quelque heures, selon qu'un mouvement des roues de l'aéronef est détecté ou non.

3. Procédé selon la revendication 1 ou la revendication 2, **caractérisé en ce que** l'étape d'envoi des mesures et données comporte en outre l'envoi de données de surveillance relatives au moins à l'état du capteur de pression et de la liaison de communication sans fil.

4. Procédé selon l'une quelconque des revendications 1 à 3, **caractérisé en ce que** l'étape d'envoi des mesures et données est précédée par un horodatage des mesures.

5. Procédé selon l'une quelconque des revendications 1 à 4, **caractérisé en ce que** l'étape d'envoi des mesures et données est précédée par un chiffrement des mesures et données, typiquement par une signature de type AES 128.

6. Procédé selon l'une quelconque des revendications 1 à 5, **caractérisé en ce que** l'étape d'envoi des mesures et données est effectuée soit sous forme de n émissions successives, n correspondant au nombre de capteurs de pression communiquant simultanément, soit sous forme d'une émission unique succédant à un traitement de n mesures de pression collectées préalablement.

7. Procédé selon la revendication 6, **caractérisé en ce que** le traitement comporte l'une des opérations suivantes : moyennes, régressions linéaires ou toutes autres opérations pour améliorer la précision et la stabilité des mesures de pression.

8. Procédé selon l'une quelconque des revendications 1 à 7, **caractérisé en ce que** l'étape de mesure comporte en outre la mesure de la température de chacun des pneumatiques.

9. Procédé selon l'une quelconque des revendications 1 à 8, **caractérisé en ce que** la liaison de communication sans fil est effectuée sur l'une des bandes de fréquence suivantes : bande ISM à 2,4GHz, bande WAIC entre 4,2 et 4,4 GHz.

10. Procédé selon l'une quelconque des revendications 1 à 9, **caractérisé en ce que** le détecteur de mouvement est un inclinomètre, un accéléromètre ou un gyroscope permettant de détecter le mouvement des roues (22) de l'aéronef.

## Patentansprüche

1. Verfahren zum Energiemanagement in einem Reifendrucküberwachungssystem in einem Luftfahrzeug, das die folgenden Schritte umfasst:
- Messen mindestens eines Luftdrucks von jedem der Reifen durch einen Drucksensor (26),
- Erhalten eines einzigen Identifikationsdatenelements, das jeden der Reifen betrifft,
- Senden der so gesammelten Messungen und Daten über eine drahtlose Kommunikationsverbindung (30; 32, 34) an eine Verarbeitungseinheit (32, 34), die innerhalb oder außerhalb des Luftfahrzeugs angeordnet ist, um sie einem Piloten oder einem Wartungspersonal bereitzustellen,
**dadurch gekennzeichnet, dass** der Schritt des Sendens der Messungen und Daten auf azyklische Weise in Abhängigkeit von einem Auslösungssignal durchgeführt wird, das von einem Bewegungsdetektor (58) der Räder (22) des Luftfahrzeugs gegeben wird, solange die Geschwindigkeit niedriger als eine vorbestimmte Höchstgeschwindigkeit ist, wobei dieser Sendeschritt unterbrochen wird und der Drucksensor (26) in den Standby-Modus versetzt wird, wenn diese Höchstgeschwindigkeit überschritten wird, und dadurch, dass bei einem Alarm Zwischensequenzen zum Senden der Daten während dieses Sendeschritts ausgelöst werden können.

2. Verfahren nach Anspruch 1, **dadurch gekennzeichnet, dass** der Schritt des Sendens der Messungen und Daten gemäß einer vorbestimmten Periodizität von einigen Sekunden bis einigen Minuten oder von einigen Minuten bis einigen Stunden in Abhängigkeit davon ausgelöst wird, ob eine Bewegung der Räder des Luftfahrzeugs festgestellt wird oder nicht.

3. Verfahren nach Anspruch 1 oder Anspruch 2, **dadurch gekennzeichnet, dass** der Schritt des Sendens der Messungen und Daten ferner das Senden von Überwachungsdaten umfasst, die zumindest den Zustand des Drucksensors und der drahtlosen Kommunikationsverbindung betreffen.

4. Verfahren nach einem der Ansprüche 1 bis 3, **dadurch gekennzeichnet, dass** dem Schritt des Sendens der Messungen und Daten ein Zeitstempeln der Messungen vorangeht.

5. Verfahren nach einem der Ansprüche 1 bis 4, **dadurch gekennzeichnet, dass** dem Schritt des Sendens der Messungen und Daten eine Verschlüsselung der Messungen und Daten, typischerweise durch eine Signatur vom Typ AES 128, vorangeht.

6. Verfahren nach einem der Ansprüche 1 bis 5, **dadurch gekennzeichnet, dass** der Schritt des Sendens der Messungen und Daten entweder in der Form von n aufeinanderfolgenden Sendungen, wobei n der Anzahl der Drucksensoren entspricht, die gleichzeitig kommunizieren, oder in der Form einer einzigen Sendung durchgeführt wird, die auf eine Verarbeitung von n zuvor gesammelten Druckmessungen folgt.

7. Verfahren nach Anspruch 6, **dadurch gekennzeichnet, dass** die Verarbeitung eine der folgenden Operationen umfasst: Mittelwertbildungen, lineare Regressionen oder sämtliche andere Operationen zum Verbessern der Präzision und der Stabilität der Druckmessungen.

8. Verfahren nach einem der Ansprüche 1 bis 7, **dadurch gekennzeichnet, dass** der Messschritt ferner die Messung der Temperatur von jedem der Reifen umfasst.

9. Verfahren nach einem der vorhergehenden Ansprüche 1 bis 8, **dadurch gekennzeichnet, dass** die drahtlose Kommunikationsverbindung auf einem der folgenden Frequenzbänder durchgeführt wird: ISM-Band auf 2,4 GHz, WAIC-Band zwischen 4,2 und 4,4 GHz.

10. Verfahren nach einem der Ansprüche 1 bis 9, **dadurch gekennzeichnet, dass** der Bewegungsdetektor ein Neigungsmesser, ein Beschleunigungsmesser oder ein Gyroskop ist, der bzw. das das Feststellen der Bewegung der Räder (22) des Luftfahrzeugs ermöglicht.

## Claims

1. Method for managing the energy in a system for verifying the inflation pressure of the tires of an aircraft, comprising the following steps:
- measuring, by a pressure sensor (26), at least one inflation pressure of each of the tires,
- obtaining a unique identification data relating to each of the tires,
- sending, via a wireless communication link (30; 32, 34), the measurements and data thus collected to a processing unit (32, 34) disposed in or out of the aircraft for them to be available to a pilot or a maintenance operator, **characterized in that** the step of sending the measurements and data is carried out in an acyclic manner as a function of a trigger signal given by a motion detector (58) that detects the motion of the wheels (22) of the aircraft as long as the speed is lower than a predetermined maximum speed, this step of sending being interrupted and the pressure sensor (26) put on standby when this maximum speed is exceeded, and **in that**, on an alert, intermediate data sending sequences can be triggered during this step of sending.

2. Method according to claim 1, **characterized in that** the step of sending the measurements and data is triggered at a predetermined periodicity from a few seconds to a few minutes or from a few minutes to a few hours, depending on whether a motion of the wheels of the aircraft is detected or not.

3. Method according to claim 1 or claim 2, **characterized in that** the step of sending the measurements and data further includes sending monitoring data relating at least to the state of the pressure sensor and of the wireless communication link.

4. Method according to any one of claims 1 to 3, **characterized in that** the step of sending the measurements and data is preceded by a timestamp of the measurements.

5. Method according to any one of claims 1 to 4, **characterized in that** the step of sending the measurements and data is preceded by an encryption of the measurements and data, typically by an AES 128 type signature.

6. Method according to any one of claims 1 to 5, **characterized in that** the step of sending the measurements and data is carried out either in the form of n successive transmissions, n corresponding to the number of pressure sensors communicating simultaneously, or in the form of a single transmission following a processing of n pressure measurements collected beforehand.

7. Method according to claim 6, **characterized in that** the processing includes one of the following operations: averages, linear regressions or any other operations to improve the accuracy and stability of the pressure measurements.

8. Method according to any one of claims 1 to 7, **characterized in that** the step of measuring further includes measuring the temperature of each of the tires.

9. Method according to any one of claims 1 to 8, **characterized in that** the wireless communication link is carried out on one of the following frequency bands: ISM band at 2.4 GHz, WAIC band between 4, 2 and 4.4 GHz.

10. Method according to any one of claims 1 to 9, **characterized in that** the motion detector is an inclinometer, an accelerometer or a gyroscope for detecting the motion of the wheels (22) of the aircraft.
